# EUROPEAN PATENT SPECIFICATION

(11) **EP 2 996 804 B1**
(45) Date of publication and mention of the grant of the patent: **30.12.2020**
(21) Application number: 14730037.0
(22) Date of filing: 15.05.2014
(51) Int. Cl.: B01J 31/18, B01J 31/22

(54) **ACTIVATION OF METAL SALTS WITH SILYLHYDRIDES AND THEIR USE IN HYDROSILYLATION REACTIONS**
AKTIVIERUNG VON METALLSALZEN MIT SILYLHYDRIDEN UND DEREN VERWENDUNG IN HYDROSILYLIERUNGSREAKTIONEN
ACTIVATION DE SELS MÉTALLIQUES À L'AIDE D'HYDRURES DE SILYLE ET LEUR UTILISATION DANS DES RÉACTIONS D'HYDROSILYLATION

(30) Priority: 15.05.2013 US 201361823599 P
(43) Date of publication of application: 23.03.2016
(73) Proprietor: Momentive Performance Materials Inc., Waterford, NY 12188 (US)
(72) Inventor: BOYER, Julie, L., Watervliet, NY 12189 (US); ROY, Aroop, Kumar, Mechanicville, NY 12118 (US)
(74) Representative: Müller-Boré & Partner Patentanwälte PartG mbB
(86) International application number: PCT/US2014/038082
(87) International publication number: WO 2014/186513

(56) References cited:
- US-A1- 2012 130 021
- US-A1- 2012 130 106
- NISHIYAMA H ET AL: "An iron-catalysed hydrosilylation of ketones", CHEMICAL COMMUNICATIONS; [6015D], ROYAL SOCIETY OF CHEMISTRY, GB, 1 January 2007 (2007-01-01), pages 760-762, XP002630220, ISSN: 1359-7345, DOI: 10.1039/B617388H [retrieved on 2006-12-20]
- NADIM S. SHAIKH ET AL: "A Convenient and General Iron-Catalyzed Hydrosilylation of Aldehydes", ORGANIC LETTERS, vol. 9, no. 26, 1 December 2007 (2007-12-01), pages 5429-5432, XP55131333, ISSN: 1523-7060, DOI: 10.1021/ol7021802
- Philip Boudjouk ET AL: "Preliminary Communication Exclusive P-hydrosilylation of acrylates catalyzed by copper-tetramethylethylenediamine", Journul of OrganometaUic Chemistry, 1 January 1993 (1993-01-01), pages 41-43, XP55131385, Retrieved from the Internet: URL:http://ac.els-cdn.com/0022328X93803142 /1-s2.0-0022328X93803142-main.pdf?_tid=f7f 5339a-130f-11e4-85ac-00000aacb35f&acdnat=1 406192183_377223b47449a3b0511d311efda7920e [retrieved on 2014-07-24]
- KATHRIN JUNGE ET AL: "Iron-Catalyzed Reduction of Carboxylic Esters to Alcohols", EUROPEAN JOURNAL OF ORGANIC CHEMISTRY, vol. 2013, no. 11, 1 March 2013 (2013-03-01), pages 2061-2065, XP55131340, ISSN: 1434-193X, DOI: 10.1002/ejoc.201300039
- DATABASE CA [Online] CHEMICAL ABSTRACTS SERVICE, COLUMBUS, OHIO, US; KAVERIN, V. V. ET AL: "Reaction of polar olefins with methyldichlorosilane on nickel-containing catalytic systems", XP002727776, retrieved from STN Database accession no. 1980:6588 & Cs-Inst Khim ET AL: "XP Number: XP009179344", CODEN: ZOKHA4, 1 January 1979 (1979-01-01), pages 1793-8, XP55131602, Retrieved from the Internet: URL:http://eolit.internal.epo.org/edo/day2 5/XP009179344.PDF

## Description

The invention relates generally to transition metal salts, more specifically to iron, nickel, cobalt, manganese, and ruthenium salts, activated with silylhydrides, and their use as efficient hydrosilylation catalysts.

Hydrosilylation chemistry, involving the reaction between a silylhydride and an unsaturated organic group, is the basis for synthetic routes to produce commercial silicone products such as silicone surfactants, silicone fluids and silanes as well as many addition cured products including sealants, adhesives, and silicone-based coatings. Conventionally, hydrosilylation reactions have been typically catalyzed by precious metal catalysts, such as platinum or rhodium metal complexes.

Various precious metal complex catalysts are known in the art. For example, U.S. Patent No. 3,775,452 discloses a platinum complex containing unsaturated siloxanes as ligands. This type of catalyst is known as Karstedt's catalyst. Other exemplary platinum-based hydrosilylation catalysts that have been described in the literature include Ashby's catalyst as disclosed in U.S. Patent No. 3,159,601, Lamoreaux's catalyst as disclosed in U.S. Patent No. 3,220,972, and Speier's catalyst as disclosed in Speier, J.L, Webster J.A. and Barnes G.H., J. Am. Chem. Soc. 79, 974 (1957).

Although these precious metal compounds and complexes are widely accepted as catalysts for hydrosilylation reactions, they have several distinct disadvantages. One disadvantage is that the precious metal complex catalysts are inefficient in catalyzing certain reactions. For example, in the case of hydrosilylations of allyl polyethers with silicone hydrides using precious metal complex catalysts, use of a large excess of allyl polyether, relative to the amount of silicone hydride, is needed to compensate for the lack of efficiency of the catalyst in order to ensure complete conversion of the silicone hydride to a useful product. When the hydrosilylation reaction is completed, this excess allyl polyether must either be: (A) removed by an additional step, which is not cost-effective, or (B) left in the product which can result in reduced performance of this product in end-use applications. Additionally, allyl polyether hydrosilylation with conventional precious metal catalysts typically results in a significant amount of undesired side products such as olefin isomers, which in turn can lead to the formation of undesirably odoriferous byproduct compounds.

Further, due to the high price of precious metals, catalysts derived from these metals can constitute a significant proportion of the cost of silicone formulations. Over the last two decades, global demand for precious metals, including platinum, has sharply increased, driving prices several hundred folds higher, thereby precipitating the need for effective, low cost replacement catalysts.

As an alternative to precious metals, certain iron complexes have been disclosed as suitable for use as ketone and/or aldehyde hydrosilylation catalysts. Illustratively, technical journal articles have disclosed that iron salts treated with phosphine or nitrogen compounds catalyze the hydrosilylation reaction of activated double bonds such as aldehydes and ketones at long reaction times. (Beller et al. Organic Letters, 2007, 26, 5429-5432; Beller et al. Angew. Chem. Int. Ed., 2008, 47, 2497-2501; Nishiyama et al. Tetrahedron Letters, 2008, 49, 110-113.) Nishiyama (Chem. Commun. 2007, 760-762.) reported the poor activity of iron acetate and 2,6-(2,4,6-Me₃-C₆H₂N=CMe)₂C₅H₃N (^{Mes}PDI) in the hydrosilylation of methyl(4-phenyl)phenylketone (7% after 20h at 65°C).

Certain iron complexes have also been disclosed as suitable for use as alkene hydrosilylation catalysts. For example, Fe(CO)s has been shown to catalyze hydrosilylation reactions at high temperatures: Nesmeyanov, A.N. et al., Tetrahedron 1962, 17, 61; Corey, J.Y et al., J. Chem. Rev. 1999, 99, 175; C. Randolph, M.S. Wrighton, J. Am. Chem. Soc. 1986, 108, 3366). However, undesirable by-products such as unsaturated silyl-olefins, resulting from dehydrogenative silylation, were formed as well.

A five-coordinate Fe(II) complex containing a pyridine di-imine (PDI) ligand with isopropyl substituents at the ortho positions of the aniline rings has been used to hydrosilylate an unsaturated hydrocarbon (1-hexene) with primary and secondary silanes such as PhSiH₃ or Ph₂SiH₂ (Bart et al., J. Am. Chem. Soc., 2004, 126, 13794;Archer, A.M. et al. Organometallics 2006, 25, 4269). However, one limitation of these catalysts is that they are only effective with the aforementioned primary and secondary phenyl-substituted silanes, and not with, for example, tertiary or alkyl-substituted silanes such as Et₃SiH, or with alkoxy substituted silanes such as (EtO)₃SiH.

Recently, new and inexpensive Fe, Ni, Co and Mn complexes containing a terdentate nitrogen ligand have been found to selectively catalyze hydrosilylation reactions, as described in co-pending U.S. Patent Nos. 8,236,915 and 8,415,443. Chirik has reported the formation of the catalytically inactive Fe(PDI)₂ species. The undesired Fe(PDI)₂ is formed by treatment of PDIFeBr₂ with the reductant Na(Hg). The yield of the Fe(PDI)₂ species increases when the reduction is performed in the presence of excess free PDI. (Chirik et al. Inorg. Chem. 2010, 49, 2782-2792. Chirik et al. Inorg. Chem. 2009, 48, 4190-4200).

One restriction of these new non-precious metal based catalysts, however, is that they are normally extremely sensitive to air and moisture, and thus are unlikely to perform well or consistently if exposed to air or moisture prior to their use. For this reason, these catalysts are typically prepared and stored under hermetically inert conditions such as in a dry box. Since it is impractical to install and use such highly inert-atmosphere equipment widely on an industrial scale, the use of these catalysts in a commercial setting may be economically prohibitive. Accordingly, there is a need in the industry for non-precious metal-based catalysts that do not require manufacturing and storing under inert conditions.

Methods are known in the art to activate catalyst precursors *in-situ.* The most well-known example is the activation of Ziegler-Natta catalyst by methylaluminoxane (MAO) for the production of polypropylene from propene (Y. V. Kissin Alkene Polymerization Reactions with Transition Metal Catalysts, Elsevier, 2008, Chapter 4).

Additional examples of catalyst activation are also known. U.S. Patent No. 5,955,555 discloses the activation of certain iron or cobalt PDI dianion complexes by polymethylaluminoxane (PMAO) for olefin polymerization. U.S. Patent No. 4,729,821 discloses the in-situ activation of Ni-catalysts by applied electrical potentials for the hydrogenolysis of ethane and ethylene. Martinez et al. demonstrated the in-situ activation of a [RuCl₂(p-cym)]₂ complex by phosphine ligands in a C-C bond formation reaction via C-H bond activation of aryl-compounds (J. Am. Chem. Soc, 2009, 131, 7887). Yi et al. described the in-situ formation of cationic ruthenium hydride complexes which catalyze the regioselective intermolecular coupling reaction of arylketones and alkenes involving C-H bond activation (Organometallics, 2009, 28, 426). More recently, Thomas et al. have described the activation of base metal complexes with ethyl magnesium bromide (Adv. Synth. Catal. 2014, 356(2-3), 584-590).

The in-situ activation of non-precious metal-based catalysts for alkene hydrosilylation reactions has been described. (See, U.S. Patent Application Publication 2012/013106A1). However, this activation employs NaBEt₃H, which is sensitive to air and incompatible with alkoxysilanes. Alkoxysilanes are known to undergo dangerous disproportionation reactions with strong hydride donors such as alkali borohydrides or alkali hydrides. (Woo, H.; Song, S.; Cho, E.; Jung, I.; Bull. Korean Chem. Soc. 1996, 17, 123-125. Itoh, M.; Ihoue, K.; Ishikawa, J.; Iwata, K. J. Organomet. Chem., 2001, 629 1-6.)

There is a continuing need in the hydrosilylation industry for methods of activating non-precious metal catalysts using milder reducing reagents that are also compatible with alkoxysilanes. The present invention provides one solution toward that need.

The exclusive beta-hydrosilylation of acrylates catalysed by copper-tetramethylethylenediamine is described in the Journal of Organometallic Chmistry, vol. 443, issue 2, C41-C43. V. V. Kaverin et al. describe in the Chemical Abstract Service the reaction of polar olefins with methyldichlorosilane on nickel-containing catalytic systems. US 2012/130021 A1 describes non-precious metal-containing 2,8-bis(imino)quinoline complexes and their use as hydrosilylation catalysts. US 2012/130106 A1 describes in-situ activation of metal complexes containing terdentate nitrogen ligands used as hydrosilylation catalysts.

Herein described is a process for the hydrosilylation of an unsaturated compound in the presence of a metal complex via the activation of the metal complex with a silylhydride and a promoter compound.

In one aspect, the present invention provides a process for the hydrosilylation of an unsaturated compound comprising at least one carbon-carbon unsaturated group with a silylhydride in the presence of a metal complex of Formula (I), Formula (II), or a combination thereof: 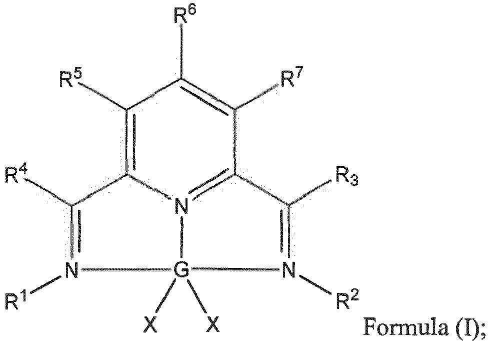 GXn Formula (II);
wherein the process comprises activating the metal complex with a silylhydride and a promoter compound, and G is Mn, Fe, Ni, Ru, or Co; each occurrence of R¹, R², R³, R⁴, R⁵, R⁶, R⁷, is independently H, CI-18 alkyl, aryl, or an inert group, wherein any two neighboring R¹, R², R³, R⁴, R⁵, R⁶, and R⁷ groups taken together may form a ring being a saturated, or unsaturated cyclic structure; X in Formula (I) is an anion; X in Formula (II) is an anion or an oxygen atom, and n = 1-3 including non-integers, and wherein the promoter compound is a compound that does not catalyze the disproportionation of alkoxysilanes and is selected from pyridine(di)imine compounds..

There is further described herein a process for the hydrosilylation of a composition containing a silylhydride and a compound containing at least one carbon-carbon unsaturated group, the process comprising:
reacting a substrate silylhydride with a compound containing at least one unsaturated group in the presence of an activating silylhydride, a promoter compound, and a metal complex to produce a hydrosilylation product containing said complex and/or derivatives thereof,
wherein the metal complex is chosen from a complex of Formula (I), Formula (II), or a combination thereof; where Formula (I) is: 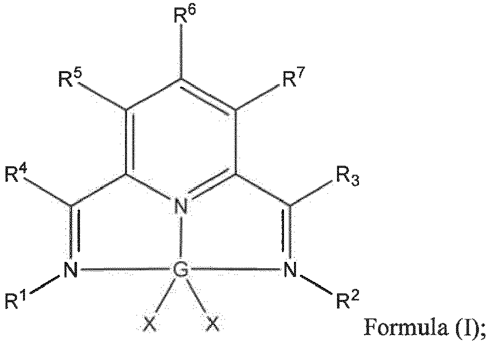
Formula (II) is: GXn; G is Mn, Fe, Ni, Ru, or Co: each occurrence of R¹, R², R³, R⁴, R⁵, R⁶, R⁷, is independently H, C1-18 alkyl, C1-C18 substituted alkyl, aryl, substituted aryl, or an inert group, wherein any two neighboring R¹, R², R³, R⁴, R⁵, R⁶, and R⁷ groups taken together may form a ring being a substituted or unsubstituted, saturated, or unsaturated cyclic structure, wherein R¹-R⁷ other than hydrogen, optionally contain at least one heteroatom; X in Formula (I) is an anion; X in Formula (II) is an anion or an oxygen atom, and n = 1-3 including non-integers.

There is further described herein a process for the hydrosilylation of a composition containing a silylhydride and a compound containing at least one carbon-carbon unsaturated group, the process comprising: (i) providing a mixture comprising a silylhydride, a compound containing at least one unsaturated group, and a complex according to Formula (I); (ii) contacting said mixture with an activating silylhydride and a promoter compound, optionally in the presence of a solvent, to cause the substrate silylhydride to react with the compound containing at least one unsaturated group to produce a hydrosilylation product containing said complex and/or derivatives thereof, and (iii) optionally removing the complex and/or derivatives thereof from the hydrosilylation product, wherein Formula (I) is: 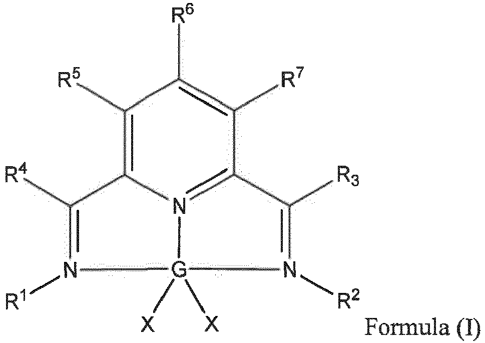 wherein G is Mn, Fe, Ni, Ru, or Co; each occurrence of R¹, R², R³, R⁴, R⁵, R⁶, R⁷, is independently H, C1-18 alkyl, C1-C18 substituted alkyl, aryl, substituted aryl, or an inert group, wherein any two of R¹, R², R³, R⁴, R⁵, R⁶, R⁷ taken together may form a ring being a substituted or unsubstituted, saturated, or unsaturated cyclic structure, wherein R¹-R⁷ other than hydrogen, optionally contain at least one heteroatom.

There is further described herein a process for the hydrosilylation of a composition containing a silylhydride and a compound containing at least one carbon-carbon unsaturated group, the process comprising: (i) providing a mixture comprising a silylhydride, a compound containing at least one unsaturated group, and a complex according to Formula (II); (ii) contacting said mixture with an activating silylhydride and a promoter compound, optionally in the presence of a solvent, to cause the substrate silylhydride to react with the compound containing at least one unsaturated group to produce a hydrosilylation product containing said complex and/or derivatives thereof, and (iii) optionally removing the complex and/or derivatives thereof from the hydrosilylation product, wherein Formula (II) is GXn, where G is Fe, Ru, Ni, Mn, or Co; X is an anion or an oxygen atom, and n = 1-3 including non-integers.

It has now been surprisingly found that various metal salts and metal compounds can be activated in-situ by a silylhydride to generate effective catalysts for the hydrosilylation of an unsaturated hydrocarbon with the same or different silylhydride or a siloxyhydride. The in-situ activation permits a user to control exactly when the reaction occurs, dramatically facilitates the activation process, and utilizes a significantly milder activating agent. This level of control can aid in the commercial production of materials made by the process, as well as downstream use of the products in applications.

As used herein, "in-situ" is intended to include, but is not limited to, the following situations: (1) the metal based complex, salt or compound of Formula (I) and (II) activated by contacting the metal-based precursor and promoter with a silylhydride when the precursor is present in the reaction mixture of the unsaturated compound and the silylhydride; and (2) the metal based complex, salt or compound of Formula (I) and (II) activated by contacting the metal precursor and promoter with the activating silylhydride to provide an admixture shortly before the admixture contacts the substrate silylhydride and the unsaturated compound. By "shortly before" is meant a time period of less than 24 hours, preferably less than 2 hours, more preferably, less than 30 minutes depending upon the properties of the particular catalyst precursor and the activating silylhydride and promoter used.

As used herein, an "activating silylhydride" is an organosilane or alkoxysilane with at least one SiH unit that, especially in the presence of the promoter, causes a metal salt, compound or complex, to catalyze a hydrosilylation reaction. The efficacy of an activating silylhydride can be determined through experimentation by those skilled in the art.

As used herein, by "unsaturated" is meant one or more carbon-carbon double or triple bonds.

The process comprises reacting a substrate silylhydride and a compound containing at least one carbon-carbon unsaturated group in the presence of an activating silylhydride, a promoter compound, and a metal complex to form a hydrosilylation product comprising the complex and/or derivatives thereof. The metal complex is chosen from a complex of Formula (I), Formula (II), or a combination of two or more thereof: 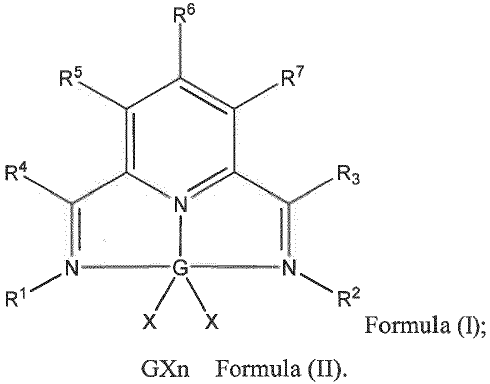 In Formulas (I) and (II), G is Mn, Fe, Ni, Ru, or Co in any of their respective valence states. Each occurrence of R¹, R², R³, R⁴, R⁵, R⁶, R⁷ is independently chosen from H, C1-18 alkyl, aryl, or an inert group, wherein any two neighboring R¹, R², R³, R⁴, R⁵, R⁶, and R⁷ groups taken together may form a ring being a saturated, or unsaturated cyclic structure.

In Formula (I), X is an anion. In Formula (II), X is an anion or an oxygen atom, and n = 1-3 including non-integer numbers. Where X represents an oxygen atom, GXₙ may represent an oxide or mixed oxide of the metal G. It will be further understood that the formula of the metal oxide or mixed oxide will vary based on the nature of the metal and the oxidation state(s). For example, iron oxides may be represented variously as FeO, Fe₂O₃, or Fe₃O₄ (FeO·Fe₂O₃). In one embodiment, G is Fe, such as Fe (II) or Fe (III). In one embodiment, X in Formula (I) or (II) is an anion, such as a halogen (F⁻, Cl⁻, Br⁻, I⁻), chelating oxygen containing ligand such an enolate, acetylacetonate, CF₃R⁸SO₃⁻ or R⁹COO⁻, wherein R⁸ is a covalent bond or a C1-C6 alkylene group optionally containing one or more heteroatoms, and R⁹ is a C1-C20 substituted or unsubstituted hydrocarbyl group optionally containing one or more heteroatoms. In one embodiment, X is R⁹COO⁻.

The manner or order in which the respective components for carrying out the process are added to one another is not particularly limited and can be chosen as desired. In one embodiment, the substrate silylhydride, compound containing at least one unsaturated group, activating silylhydride, promoter, and metal complex/salt can be added together in one solution and then reacted. In another embodiment, the process comprises providing a first mixture comprising the metal complex/salt, promoter, and activating silylhydride, and adding a solution of the substrate silylhydride and unsaturated compound to the first mixture. In still another embodiment, the process comprises providing a first mixture of the metal salt, promoter, activating silylhydride, and substrate silylhydride, and subsequently adding the unsaturated compound to the first mixture. In still another embodiment, the process comprises providing a first mixture of the metal salt, promoter, activating silylhydride, and unsaturated compound, and subsequently adding the substrate silylhydride to the first mixture. It will be appreciated that the first mixtures in the above embodiments may be heated or preliminarily reacted prior to addition of the remaining components.

In a further embodiment, the process may comprise providing a first mixture comprising the metal complex/salt, promoter, and activating silane and heating the first mixture; adding the unsaturated compound to the first mixture to form a second mixture, and subsequently adding the substrate silylhydride to the second mixture. In still another further embodiment, the process may comprise providing a first mixture comprising the metal complex/salt, promoter, and activating silylhydride and heating the first mixture; adding the substrate silylhydride to the first mixture to form a second mixture, and subsequently adding the unsaturated compound to the second mixture.

As indicated above, in one embodiment, the present invention is directed to a process for the hydrosilylation of a composition containing a silylhydride and a compound containing at least one carbon-carbon unsaturated group, the process comprising: (i) providing a mixture comprising a silylhydride, a compound containing at least one unsaturated group, and a complex according to Formula (I) and/or Formula (II); (ii) contacting said mixture with an activating silylhydride and a promoter compound, optionally in the presence of a solvent, to cause the substrate silylhydride to react with the compound containing at least one unsaturated group to produce a hydrosilylation product containing said complex and/or derivatives thereof, and (iii) optionally removing the complex and/or derivatives thereof from the hydrosilylation product.

It will also be appreciated that, as previously described, the silylhydride employed to activate the metal complex can be the same silylhydride that will react with the unsaturated compound. In such circumstances, the substrate silylhydride and the activating silylhydride can be the same compound, and a single compound can be employed in the process. That is, when the substrate silylhydride is also the activating silylhydride, it is not necessary to utilize separate additions of that material at separate steps in the process.

Non-limiting examples of embodiments of possible hydrosilylation reactions in accordance with the present process are shown schematically in Equation 1; 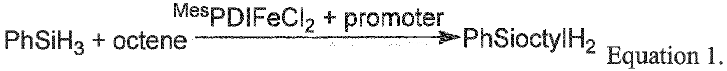 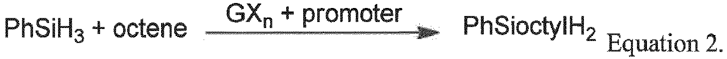 In the embodiments illustrated in Equations 1 and 2, PhSiH₃ functions as both the substrate silylhydride and the activating silylhydride.

The methods to prepare the catalyst precursors of the present invention are known to a person skilled in the field. The complex of Formula (I) can be prepared by reacting a PDI ligand with a metal halide, such as FeBr₂. Typically, the PDI ligands are produced through condensation of an appropriate amine or aniline with 2,6-diacetylpyridine and its derivatives. If desired, the PDI ligands can be further modified by known aromatic substitution chemistry. An exemplary method to prepare the complex of Formula (I) can be found in Organometallics (2010), 29(5), 1168-1173 to Zhang et al.

A wide variety of promoters can be employed in the catalyst activation step. Though not wishing to be bound by any theory or mechanism, the promoter will have a high affinity for coordination to a silicon hydride compound and is able to promote the in-situ formation of a hypercoordinate silicon species. (See, Corriu et al. Chem. Rev., 1993, 93, 1371-1448). General useful promoters include neutral or ionic compounds selected from the groups consisting of amines, imines, carboxylates, ethers, alcohols, ketones, heterocyclics, and other N and/or O-containing species, or mixtures of two or more thereof. These species may be mono-dentate or multi-dentate. Specific general examples of promoters include, but are not limited to, 2,6-pyridine(di)imine type compounds such as, for example, (2,4,6,-Me3C6H₂N=CMe)₂C₅H₃N (^{Mes}PDI), tetramethylethylenediamine (TMEDA), triethanolamine, lithium acetylacetonate (Liacac), sodium acetate (NaOAc), tetrabutylammonium fluoride (TBAF), o-aminophenol, diacetylpyridine, dimethanolpyridine, phosphines, pinacol, and imidazole. According to the present invention, the promoter is selected from pyridine(di)imine compounds. According to the present invention, the promoter is compatible and does not react with the substrates for the hydrosilylation reaction. In particular, the promoter does not catalyze the disproportionation of alkoxysilanes. The promoter ^{Mes}PDI, for example, does not disproportionate alkoxysilanes such as triethoxysilane.

The reaction components can optionally be disposed in a solvent. The solvent is not limited and can be either polar or non-polar. Any solvent can be used in the method of the invention, as long as it facilitates the activation and the reaction, without deleterious effects. It is not necessary that the complex of Formula (I) or the salt of Formula (II) be dissolved in any mixture to which it is added (e.g., to a mixture of solvent, substrate, promoter mixture, etc.) before the addition of the other components to that mixture.

The metal species of Formulae (I) and (II) can be activated in-situ to generate reactive catalysts effective at selectively catalyzing industrially practiced hydrosilylation reactions. Accordingly, the catalyst precursors of the invention have utility in the preparation of useful silicone products, including, but not limited to, coatings such as release coatings, room temperature vulcanizates, sealants, adhesives, products for agricultural and personal care applications, silicone surfactants for stabilizing polyurethane foams and silyl- or silicone-modified organic polymers.

When used as catalyst precursors for the hydrosilylation reaction, the complexes of Formula (I) can be supported or immobilized on a support material, for example, carbon, silica, alumina, MgCl₂ or zirconia, or on a polymer or prepolymer, for example polyethylene, polypropylene, polystyrene, or poly(aminostyrene). The metal complexes can also be supported on dendrimers.

In some embodiments, for the purposes of attaching the catalyst precursors of the invention to a support, it is desirable that at least one of R¹ to R⁷ of the metal complexes, has a functional group that is effective to covalently bond to the support. Exemplary functional groups include but are not limited to SH, COOH, NH₂, or OH groups.

In certain embodiments, silica supported catalyst precursors may be prepared via Ring-Opening Metathesis Polymerization (ROMP) technology as discussed in the literature, for example Macromol. Chem. Phys. 2001, 202, No. 5, pages 645-653; Journal of Chromatography A, 1025 (2003) 65-71. In some embodiments, the catalyst precursors can be immobilized on the surface of dendrimers by the reaction of Si-Cl bonded parent dendrimers and functionalized PDI in the presence of a base is as illustrated by Kim et al. in Journal of Organometallic Chemistry 673 (2003) 77-83.

The temperature range for the process of the hydrosilylation is from -50 °C to 250 °C, preferably from -10 °C to 150 °C. The silylhydride and the compound having at least one unsaturated group are typically mixed in a molar ratio ranging from about 0.5:2 to about 1:0.8, preferably from about 0.8:1.3 to about 1:0.9, and most preferably in a molar ratio of 1:1 of the reactive groups. The molar ratio of the activating silylhydride with respect to the catalyst precursor is between about 1000:1 and 1:1, preferably between about 100:1 and 10:1. The molar ratio of the promoter with respect to the catalyst precursor is between 1000:1 and 1:1, preferably between 10:1 and 1:1. The amount of catalyst in the reaction mixture calculated on ppm level of the metal in the total mass of the mixture is 1 - 10,000 ppm, 10-5000 ppm, even 20-2000 ppm. For an in-situ activation, a nitrogen atmosphere is particularly suitable.

The silylhydride employed in the hydrosilylation reaction is not particularly limited. It can be any compound selected from the group consisting of R¹⁰ₐSiH₄₋ₐ, (R¹⁰O)ₐSiH₄₋ₐ, QᵤTᵥTₚ^{H}D_{w}D^{H}ₓM^{H}_{y}M_{z}, and combinations of two or more thereof. The silylhydride can contain linear, branched or cyclic structures, or combinations thereof. As used herein, each occurrence of R¹⁰ is independently C1-C18, preferably C1-C10, more preferably C1-C6 alkyl, C1-C18, preferably C1-C10, more preferably C1-C6 substituted alkyl, wherein R¹⁰ optionally contains at least one heteroatom, each occurrence of a independently has a value from 1 to 3, each of p, u, v, y and z independently has a value from 0 to 20, w and x are from 0 to 1000, provided that p + x + y equals 1 to 3000 and the valences of the all the elements in the silylhydride are satisfied. Preferably, p, u, v, y, and z are from 0 to 10, w and x are from 0 to 100, wherein p+ x + y equals 1 to 100.

As used herein, an "M" group represents a monofunctional group of formula R¹¹₃SiO_{1/2}, a "D" group represents a difunctional group of formula R¹¹₂SiO_{2/2}, a "T" group represents a trifunctional group of formula R¹¹SiO_{3/2}, and a "Q" group represents a tetrafunctional group of formula SiO_{4/2}, an "M^{H}" group represents HR¹¹₂SiO_{1/2}, a "T^{H}" represents HSiO_{3/2}, and a "D^{H}" group represents R¹¹HSiO_{2/2}. Each occurrence of R¹¹ is independently C1-C18, preferably C1-C10, more preferably C1-C6 alkyl, C1-C18, preferably C1-C10, more preferably C1-C6 substituted alkyl, wherein R¹¹ optionally contains at least one heteroatom.

The activating silylhydride can, in embodiments, be chosen from a primary silane, a tertiary silane, or combinations thereof. Examples of compounds that are particularly suitable as activating silylhydrides include, but are not limited to, PhSiH₃, octylsilane, triethoxysilane, etc.

In one embodiment, the substrate silylhydride is also the activating silylhydride for the purpose of the reaction. In embodiments where the substrates silylhydride is also the activating silylhydride, the process does not require separate additions of that material to the system. For example, it is sufficient to provide that substrate/activating silylhydride to a particular mixture to carry out the process.

The compound containing a carbon-carbon unsaturated group employed in the hydrosilylation reaction includes, but is not limited to, unsaturated polyethers such as alkyl-capped allyl polyethers, vinyl functionalized alkyl capped allyl or methallyl polyether; terminally unsaturated amines; alkynes; C2-C18 olefins, preferably alpha olefins; internal olefins; unsaturated cycloalkyl epoxide such as vinyl cyclohexyl epoxide; terminally unsaturated acrylates or methyl acrylates; unsaturated aryl ethers; unsaturated aromatic hydrocarbons; unsaturated cycloalkanes such as trivinyl cyclohexane; unsaturated esters and acids; vinyl-functionalized polymer or oligomer; alkenyl-functional silanes, an alkenyl-functional silicones, and vinyl-functionalized silanes and vinyl-functionalized silicones.

Unsaturated polyethers suitable for the hydrosilylation reaction preferably are polyoxyalkylenes having the general formula:

R¹²(OCH₂CH₂)_{z}(OCH₂CHR¹⁴)_{w}-OR¹³ (Formula III)

or

R¹³O(CHR¹⁴CH₂O)_{w}(CH₂CH₂O)_{z}-CR¹⁵₂-C≡C-C¹⁵₂-(OCH₂CH₂)_{z}(OCH₂CHR¹⁴)_{w}R¹⁶ (Formula IV)

or

H₂C=CR¹⁵CH₂O(CH₂CH₂O)_{z}(CH₂CHR¹⁴O)_{w}CH₂CR¹⁵=CH₂ (Formula V)

wherein R¹² denotes an unsaturated organic group containing from 2 to 10 carbon atoms such as allyl, methallyl , propargyl or 3-pentynyl. When the unsaturation is olefinic, it is desirably terminal to facilitate smooth hydrosilylation. However, when the unsaturation is a triple bond, it may be internal. R¹³ is vinyl, or a polyether capping group of from 1 to 8 carbon atoms such as the alkyl groups: CH3, n-C₄H₉, t-C₄H₉ or i-C₈H₁₇, the acyl groups such as CH₃COO, t-C₄H₉COO, the beta-ketoester group such as CH₃C(O)CH₂C(O)O, or a trialkylsilyl group. R¹⁴ and R¹⁵ are monovalent hydrocarbon groups such as the C1 - C20 alkyl groups, for example, methyl, ethyl, isopropyl, 2-ethylhexyl, dodecyl and stearyl, or the aryl groups, for example, phenyl and naphthyl, or the alkaryl groups, for example, benzyl, phenylethyl and nonylphenyl, or the cycloalkyl groups, for example, cyclohexyl and cyclooctyl. R¹⁵ may also be hydrogen. Methyl is the most preferred R¹⁴ and R¹⁵ groups. R¹⁶ is vinyl, or a polyether capping group of from 1 to 8 carbon atoms as defined herein above for R¹³. Each occurrence of z is 0 to 100 inclusive and each occurrence of w is 0 to 100 inclusive. Preferred values of z and w are 1 to 50 inclusive.

The metal complexes of the invention can also be used in a process for preparing a silylated polyurethane, which includes the step of contacting a terminally unsaturated polyurethane polymer with a silylhydride in the presence of an in-situ activated complex of Formula (I) or (II).

After being activated by the activating silylhydride and promoter, the species formed from Formula I and II are efficient and selective in catalyzing hydrosilylation reactions. For example, when the metal complexes of the invention are employed in the hydrosilylation of an alkyl-capped allyl polyether the reaction products are essentially free of unreacted alkyl-capped allyl polyether and its isomerization products. In one embodiment, the reaction products do not contain the unreacted alkyl-capped allyl polyether and its isomerization products.

Herein further described are the compositions produced from the above described methods. These compositions contain the hydrosilylated products of the silylhydride and the compound having at least one unsaturated group plus derivatives from the activating agents. The hydrosilylated products that are produced by the process of the present invention have uses in the synthesis of silicone materials such as silanes, adhesives, products for agricultural and personal care applications, and silicone surfactant for stabilizing polyurethane foams.

The following examples are intended to illustrate, but in no way limit the scope of the present invention. All parts and percentages are by weight and all temperatures are in degrees Celsius unless explicitly stated otherwise.

### EXAMPLES

### General Considerations:

All air and moisture-sensitive manipulations were carried out using a standard vacuum line, Schlenk, and cannula techniques or in an inert atmosphere drybox containing an atmosphere of purified nitrogen. Methoxypolyethyleneglycolallylether substrate having an average molecular weight of 450 was obtained from NOF Corporation, and sold under the trade name UNIOX PKA5008. All other material was purchased from Aldrich. Solvents and substrates for air and moisture-sensitive manipulations were initially dried and deoxygenated before use. The preparation of PDIFeCl₂ complexes is known to people skilled in the art. The ¹H, ¹³C and ²⁹Si NMR spectra were recorded on a Bruker 200 mHZ and 400 mHz spectrometers. GC analysis was performed using a Aligent 7890A gas chromatograph.

The following abbreviations and terms are used: GC, Gas Chromatography; MS, Mass Spectroscopy; THF, tetrahydrofuran; NMR, Nuclear Magnetic Resonance.

### Example 1: Hydrosilylation of 1-Octene with Phenylsilane (PhSiH₃) using ^{Mes}PDIFeCl₂ as a Catalyst Precursor

A vial was charged with ^{Mes}PDIFeCl₂ (0.006 g, 0.010 mmol) and purged with nitrogen. A stock solution of ^{Mes}PDI in THF (1 mL, 29 mM, 0.03 mmol), PhSiH₃ (0.4 mL, 0.0032 mol) and octene (0.5 mL, 0.0032 mol) were added to the vial. The reaction was stirred at room temperature for 20 hr. The material was exposed to air, filtered and submitted for analysis. In a first control example, a reaction was performed similarly to the above, except 1 mL of THF was added instead of the ^{Mes}PDI stock solution. In a second control example, a reaction was performed similarly to the above, except without the addition of the ^{Mes}PDIFeCl₂. The results of these examples are shown in Table 1.

**Table 1: Hydrosilylation of 1-Octene with Phenylsilane (PhSiH₃) using ^{Mes}PDIFeCl₂ as a Catalyst Precursor**

| **Additives** | **% Yield*** |
|---|---|
| ^{Mes}PDIFeCl₂/^{Mes}PDI solution | 40 |
| ^{Mes}PDIFeCl₂ | 21 |
| ^{Mes}PDI | 0 |

| | |
|---|---|
| *Yield of PhSioctylH₂ was determined by ²⁹Si NMR. | |

### Example 2: Hydrosilylation of 1-Octene with Phenylsilane (PhSiH₃) using Iron Stearate as a Catalyst Precursor

A vial was charged with iron (II) stearate (0.002 g, 0.003 mmol). In a nitrogen filled glovebox, a stock solution of ^{Mes}PDI in THF (1 mL, 9.6 mM, 0.01 mmol), PhSiH₃ (0.4 mL, 0.0032 mol) and octene (0.5 mL, 0.0032 mol) were added to the vial. The reaction was heated to 60°C for 1 h. The material was exposed to air, filtered and submitted for analysis. In a first control example, a reaction similar to the above was performed, except 1 mL of THF was added instead of the ^{Mes}PDI stock solution. In a second control example, a reaction similar to above was performed except without the addition of the iron stearate. The results of these examples are shown in Table 2.

**Table 2: Hydrosilylation of 1-Octene with Phenylsilane (PhSiH₃) using Iron Stearate as a Catalyst Precursor**

| **Additives** | **% Yield*** |
|---|---|
| Iron (II) stearate/MesPDI | 97 |
| Iron (II) stearate | 15 |
| ^{Mes}PDI | 0 |

| | |
|---|---|
| *Yield of PhSioctylH₂ was determined by ²⁹Si NMR. | |

### Examples 3-19: Hydrosilylation of 1-Octene with Phenylsilane (PhSiH₃) using a Metal Salt as a Catalyst Precursor and ^{Mes}PDI as a promoter

In a nitrogen filled glovebox, a vial was charged with the metal salt (0.011 mmol). A stock solution of ^{Mes}PDI in THF (1 mL, 35 mM, 0.035 mmol), PhSiH₃ (0.4 mL, 0.0032 mol) and octene (0.5 mL, 0.0032 mol) were added to the vial. The reaction was heated to 60°C for 5 h. The material was exposed to air, filtered and submitted for analysis. The results are shown in Table 3.

**Table 3: Hydrosilylation of 1-Octene with Phenylsilane (PhSiH₃) with Metal Salts as a Catalyst Precursor and ^{Mes}PDI as a Promoter**

| **Example** | **Metal salt** | **% Yield*** |
|---|---|---|
| 3 | Iron (II) stearate | 95 |
| 4 | Iron (II) acetate | 75 |
| 5 | Iron (II) chloride | 43 |
| 6 | Iron (II) triflate | 11 |
| 7 | Iron (III) acetylacetonate | 41 |
| 8 | Iron (III) citrate | 25 |
| 9 | Hematite | 22 |
| 10 | Magnetite | 7 |
| 11 | Ruthenium chloride | 7 |
| 12 | Manganese (III) acetylacetonate | 51 |
| 13 | Iron (II) oxalate | 0 |
| 14 | Iron (III) tartrate | 0 |
| 15 | Copper (I) chloride | 0 |
| 16 | Copper (II) chloride | 0 |
| 17 | Copper (II) acetate | 0 |
| 18 | Zinc (II) chloride | 0 |
| 19 | Zinc (II) acetate | 0 |

| | | |
|---|---|---|
| *Yield of PhSioctylH₂ was determined by ²⁹Si NMR. | | |

### Example 20: Hydrosilylation of Octene with Phenylsilane (PhSiH₃) using a Metal Salt as a Catalyst Precursor and ^{Mes}PDI as a promoter

Experiments with metal salts were run similar to what is described in Example 3. The reactions were run with either 1-octene or 2-octene as the unsaturated substrate as indicated in the table below. The ratio of the terminal and internal addition products (Products A and B) from the hydrosilylation was determined. The results are shown in Table 4.

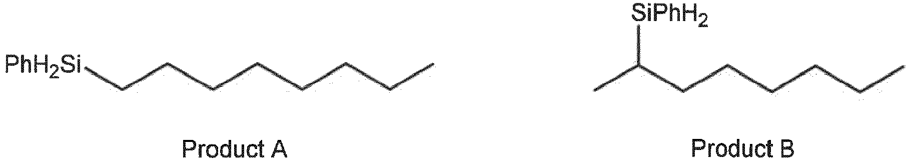

**Table 4. Hydrosilylation of Octene with Phenylsilane (PhSiH₃) using a Metal Salt as a Catalyst Precursor and ^{Mes}PDI as a promoter**

| **Metal salt** | **olefin** | **% Yield Product A** | **% Yield Product B** |
|---|---|---|---|
| Manganese (III) acetylacetonate | 1-octene | 51 | 0 |
| Iron (II) stearate (Ex. 3) | 1 -octene | 95 | 3 |
| Cobalt (II) stearate | 1 -octene | 0 | 100 |
| Cobalt (III) acetylacetonate | 1-octene | 0 | 100 |
| Nickel (II) stearate | 1 -octene | 23 | 41 |
| Nickel (II) acetylacetonate | 1-octene | 50 | 50 |
| Cobalt (II) chloride | 1-octene | 0 | 100 |
| Iron (II) stearate | 2-octene | 0 | >98 |

### Examples 21-24: Hydrosilylation of 1-Octene with Phenylsilane (PhSiH₃), with Iron Stearate used as a Catalyst Precursor and ^{R}PDI as Promoter

The examples below were run in a similar manner except that the reactions were run with 1 mL THF, 1 mL toluene, or neat as indicated in the table below. A vial was charged with the iron (II) stearate (0.004g, 0.006 mmol) and the PDI additive (0.019 mmol). In a nitrogen filled glovebox, the vial was charged with toluene (1 mL), PhSiH₃ (0.4 mL, 0.0032 mol) and octene (0.5 mL, 0.0032 mol). The reaction was heated to 80°C. Aliquots of the reaction mixture were taken periodically and tested by GC. After the reaction was judged complete by GC, the material was exposed to air, filtered and submitted for analysis. The results are shown in Table 5.

**Table 5. Hydrosilylation of 1-Octene with Phenylsilane (PhSiH₃), with Iron Stearate used as a Catalyst Precursor and ^{R}PDI as Promoter**

| **Example** | **Additive** | **% Yield*** | **Time (h)** |
|---|---|---|---|
| 21 | ^{Mes}PDI | 94 | 1 |
| 22 | ^{Ph}PDI | 93 | 1 |
| 23 | ^{Et2}PDI | 100 | 5 |
| 24 | ^{iPr2}PDI | 87 | 9 |

| | | | |
|---|---|---|---|
| *Yield of PhSioctylH₂ was determined by ²⁹Si NMR. | | | |

(^{Ph}PDI = (2-C₆H₅-C₆H₂N=CMe)₂C₅H₃N, ^{Et2}PDI = (2,6-Et₂-C₆H₂N=CMe)₂C₅H₃N, ^{iPr2}PDI =2,6-ⁱPr₂-C₆H₂N=CMe)₂C₅H₃N)

### Examples 25-34: Hydrosilylation of 1-Octene with an silylhydride, with Iron Stearate used as a Catalyst Precursor and a ^{Mes}PDI Promoter

A vial was charged with the iron (II) stearate (0.002g, 0.003 mmol). In a nitrogen filled glovebox, the vial was charged with a stock solution of ^{Mes}PDI in THF (1 mL,10 mM, 0.010 mmol), silylhydride (0.032 mol), octene (0.5 mL, 0.032 mol). The reaction was heated to 60°C for 5h. The results are shown in Table 6. All examples were run similarly except that the reactions were run with 1 mL THF, 1 mL toluene, or neat as indicated in the table below.

**Table 6: Hydrosilylation of 1-Octene with an Organosilane, with Iron Stearate used as a Catalyst Precursor and a PDI Promoter**

| **Example** | **Silane** | **Solvent** | **% Yield*** |
|---|---|---|---|
| 25 | PhSiH₃ | THF | 97% |
| 26 | PhSiH₃ | toluene | 95% |
| 27 | PhSiH₃ | neat | 92% |
| 28 | OctylSiH₃ | THF | 50% |
| 29 | OctylSiH3 | toluene | 0% |
| 30 | Me(EtO)₂SiH | THF | 53% |
| 31 | Me(EtO)₂SiH | toluene | 3% |
| 32 | Me(EtO)₂SiH | neat | 61% |
| 33 | Si(OEt)₃H | toluene | 25% |
| 34 | Si(OEt)₃H | neat | 27% |

| | | | |
|---|---|---|---|
| *% Yield is given for the mono-hydrosilylated product determined by ²⁹Si NMR | | | |

### Examples 35-74. Hydrosilylation of 1-octene with phenylsilane (PhSiH₃) using iron stearate as a catalyst precursor and various promoters

A vial was charged with iron (II) stearate (0.004 g, 0.006 mmol) and an additive (0.018 mmol). In a nitrogen filled glovebox THF (2 mL), PhSiH₃ (0.8 mL, 0.0064 mol) and octene (1.0 mL, 0.0064 mol) were added to the vial. The reaction was heated to 60°C for 5 h. The material was exposed to air, filtered and submitted for analysis. Examples 36 to 72 are Reference Examples.

| **Example** | **Additive** | **% Yield** |
|---|---|---|
| 35 | ^{Mes}PDI | >95 |
| 36 | ^{Ipr2}Impy | 11 |
| 37 | R-^{ipr2}pybox | 22 |
| 38 | salen | 22 |
| 39 | 2,6-diacetylpyridine | 56 |
| 40 | 2,6-dimethanolpyridine | 51 |
| 41 | 2,6-dicarboxyamidepyridine | 34 |
| 42 | 2-acetylpyridine | 27 |
| 43 | 2-acetylphenol | 31 |
| 44 | TMEDA | 21 |
| 45 | proton sponge | 20 |
| 46 | triethanolamine | 32 |
| 47 | pinacol | 30 |
| 48 | catechol | 0 |
| 49 | 2-aminophenol | 20 |
| 50 | 2-hydroxypyridine | 15 |
| 51 | proline | 0 |
| 52 | bpy | 5 |
| 53 | tpy | 0 |
| 54 | ^{t}Bu₃-tpy | 1 |
| 55 | potassium tris(pyrazolyl)borate | 0 |
| 56 | tris(pyrazolyl)methane | 28 |
| 57 | imidazole | 22 |
| 58 | N-methyl imidazole | 14 |
| 59 | benzimidazole | 24 |
| 60 | OEP | 0 |
| 61 | TPP | 2 |
| 62 | phthalcyanine | 11 |
| 63 | sodium formate | 32 |
| 64 | sodium acetate | 24 |
| 65 | sodium stearate | 20 |
| 66 | sodium benzoate | 31 |
| 67 | lithium acetylacetonate | 30 |
| 68 | sodium citrate tribasic | 29 |
| 69 | citric acid | 0 |
| 70 | TBAF | 18 |
| 71 | PCy₃ | 21 |
| 72 | BINAP | 25 |

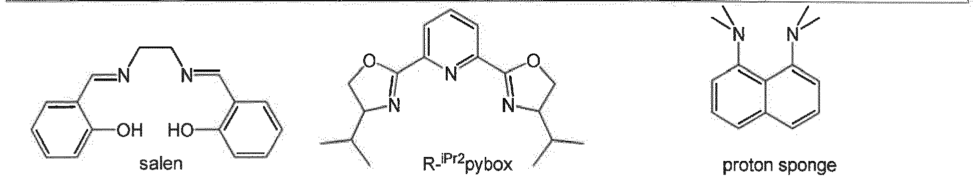

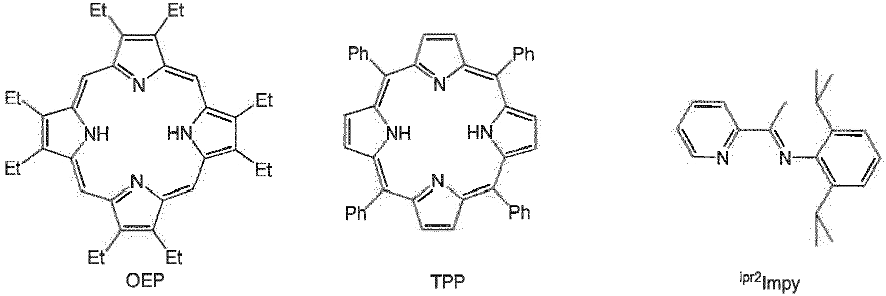

### Example 73: Hydrosilylation of 1-Octene with Methylbis(trimethylsiloxy)silane (MD^{H}M), with PhSiH₃ used as a Activating Silylhydride, Iron Stearate as a Catalyst Precursor and ^{Mes}PDI as a Promoter.

A vial was charged with the iron (II) stearate (0.008g, 0.013 mmol) and the ^{Mes}PDI additive (0.0153g, 0.039 mmol). In a nitrogen filled glovebox, the vial was charged with THF (1 mL) and PhSiH₃ (0.25 mL, 0.002 mol). The reaction was heated to 60°C for 1 h to afford a brown solution. A second vial was charged with octene (0.5 mL, 0.0032 mol) and MD^{H}M (0.86 mL, 0.0032 mol). To the second vial, 0.25 mL of the brown solution was added. The material was heated to 60°C for an additional hour. The material was exposed to air, filtered and submitted for analysis. The product was recovered in >80% yield.

### Example 74: Hydrosilylation of 1-Octene with Triethoxysilane, with PhSiH₃ used as a Activating Silylhydride, Iron Stearate as a Catalyst Precursor and ^{Mes}PDI as a Promoter

A vial was charged with the iron (II) stearate (0.008g, 0.013 mmol) and the ^{Mes}PDI additive (0.0153g, 0.039 mmol). In a nitrogen filled glovebox, the vial was charged with THF (1 mL) and PhSiH₃ (0.25 mL, 0.002 mol). The reaction was heated to 60°C for 1 h to afford a brown solution. A second vial was charged with octene (0.5 mL, 0.0032 mol) and Si(OEt)₃H (0.59 mL, 0.0032 mol). To the second vial, 0.25 mL of the brown solution was added. The material was heated to 60C for an additional hour. The material was exposed to air, filtered and submitted for analysis. The octylSi(OEt)₃ product was recovered in >90% yield.

### Example 75: Hydrosilylation of Methyl-Capped Allyl Polyether with MD^{H}M, with PhSiH₃ used as an Activator and Iron Stearate as a Catalyst Precursor and ^{Mes}PDI used as a Promoter

A vial was charged with the iron (II) stearate (0.015g, 0.024 mmol) and the ^{Mes}PDI additive (0.029g, 0.072 mmol). In a nitrogen filled glovebox, the vial was charged with THF (1 mL) and PhSiH₃ (0.25 mL, 0.002 mol). The reaction was heated to 60°C for 1 h to afford a brown solution. A second vial was charged with methyl-capped allyl polyether substrate (PKA5008, 0.0032 mol) and MD^{H}M (0.0032 mol). To the second vial, 0.25 mL of the brown solution was added. The material was heated to 60C for an additional 5 hour. The material was exposed to air, filtered and submitted for analysis. The product was recovered in >40% yield.

## Claims

1. A process for the hydrosilylation of an unsaturated compound comprising at least one carbon-carbon unsaturated group with a silylhydride in the presence of a metal complex of Formula (I), Formula (II), or a combination thereof: 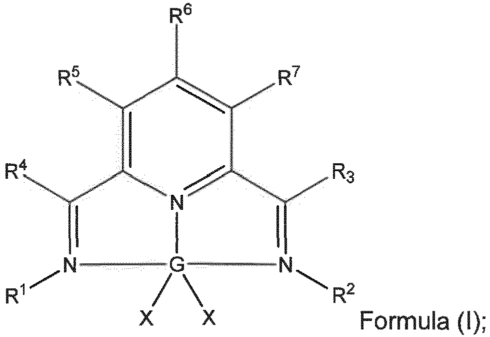 GXn Formula (II);
wherein the process comprises activating the metal complex with a silylhydride and a promoter compound, and G is Mn, Fe, Ni, Ru, or Co; each occurrence of R¹, R², R³, R⁴, R⁵, R⁶, R⁷, is independently H, C1-18 alkyl, aryl, or an inert group, wherein any two neighboring R¹, R², R³, R⁴, R⁵, R⁶, and R⁷ groups taken together may form a ring being a saturated, or unsaturated cyclic structure X in Formula (I) is an anion; X in Formula (II) is an anion or an oxygen atom, and n = 1-3 including non-integers, and wherein the promoter compound is a compound that does not catalyze the disproportionation of alkoxysilanes and is selected from pyridine(di)imine compounds.

2. The process of claim 1, wherein a single silylhydride is employed for activating the metal complex and for the hydrosilylation reaction, wherein the silylhydride is preferably chosen from phenylsilane, and wherein the silylhydride is most preferably triethoxysilane.

3. The process of claim 1, wherein the silylhydride employed to activate the metal complex is different than the silylhydride undergoing hydrosilylation with the unsaturated compound, and wherein the silylhydride employed to activate the metal complex is preferably chosen from phenylsilane and triethoxysilane, and the silylhydride undergoing hydrosilylating the unsaturated compound is chosen from R¹⁰ₐSiH₄₋ₐ, (RO)ₐSiH₄₋ₐ, , QᵤTᵥTₚ^{H}D_{w}D^{H}ₓM^{H}_{y}M_{z}, and combinations thereof, wherein Q is SiO_{4/2}, T is R⁴SiO_{3/2}, T^{H} is HSiO_{3/2}, D is R¹¹₂SiO_{2/2}, D^{H} is R¹¹HSiO_{2/2}, M^{H} is HR¹¹₂SiO_{1/2}, M is R'₃SiO_{1/2}, each occurrence of R and R' is independently C1-C18 alkyl, C1-C18 substituted alkyl, wherein R¹⁰ and R¹¹ optionally contain at least one heteroatom, each occurrence of a independently has a value from 1 to 3, p is from 0 to 20, u is from 0 to 20, v is from 0 to 20, w is from 0 to 1000, x is from 0 to 1000, y is from 0 to 20, and z is from 0 to 20, provided that p+ x + y equals 1 to 3000, and the valences of the all the elements in the silylhydride are satisfied.

4. The process of claim 1 wherein the promoter has a pKb greater than 9.7.

5. The process of claim 1 wherein the promoter is selected from ^{Mes}PDI, ^{Ph}PDI, ^{Et2}PDI or ^{iPr2}PDI.

6. The process of claim 1, wherein Formula (I) is ^{Mes}PDIFeCl₂.

7. The process of claim 1, wherein X in Formula (I) or Formula (II) is chosen from F⁻, Cl⁻, Br, I⁻, an enolate, an acetylacetonate, CF₃R⁸SO₃⁻ or R⁹COO⁻, wherein R⁸ is a covalent bond or a C1-C6 alkylene group, and R⁹ is a C1-C10 substituted or unsubstituted hydrocarbyl group, optionally containing at least one heteroatom.

8. The process of claim 1, wherein the unsaturated organic substrate contains an internal olefin.

9. The process of claim 8, wherein said process produces an internal addition product.

10. The process of claim 9, wherein said internal addition product is converted into an internal alcohol.

11. The process of claim 1, wherein the complex according to Formula (I) is immobilized on a support, wherein the support is preferably selected from the group consisting of carbon, silica, alumina, MgCl₂, zirconia, polyethylene, polypropylene, polystyrene, poly(aminostyrene), dendrimers, and combinations thereof, and wherein preferably at least one of R¹-R⁷ contains a functional group that covalently bonds with the support.

12. The process of claim 1, wherein the silylhydride for hydrosilylating the unsaturated compound is selected from the group consisting of R¹⁰ₐSiH₄₋ₐ, (RO)ₐSiH₄₋ₐ, QᵤTᵥTₚ^{H}D_{w}D^{H}ₓM^{H}_{y}M_{z}, and combinations of two or more thereof, wherein Q is SiO_{4/2}, T is R⁴SiO_{3/2}, T^{H} is HSiO_{3/2}, D is R¹¹₂SiO_{2/2}, D^{H} is R¹¹HSiO_{2/2}, M^{H} is HR¹¹₂SiO_{1/2}, M is R'₃SiO_{1/2}, each occurrence of R and R' is independently C1-C18 alkyl, C1-C18 substituted alkyl, wherein R¹⁰ and R¹¹ optionally contain at least one heteroatom, each occurrence of a independently has a value from 1 to 3, p is from 0 to 20, u is from 0 to 20, v is from 0 to 20, w is from 0 to 1000, x is from 0 to 1000, y is from 0 to 20, and z is from 0 to 20, provided that p+ x + y equals 1 to 3000, and the valences of the all the elements in the silylhydride are satisfied, wherein preferably p, u, v, y, and z are from 0 to 10, w and x are from 0 to 100, wherein p + x + y equals 1 to 100.

13. The process of claim 1, wherein the compound containing an unsaturated group is selected from the group consisting of an alkyl-capped allyl polyether, a vinyl functionalized alkyl-capped allyl or methallyl polyether, a terminally unsaturated amine, an alkyne, a C2-C40 olefin, an unsaturated alkyl or cycloalkyl epoxide, a terminally unsaturated acrylate or methyl acrylate, an unsaturated aryl ether, an aralkene or aralkyne, an unsaturated cycloalkane, an internal olefin, an unsaturated acid or ester, a vinyl-functionalized polymer or oligomer, an alkenyl-functional silane, an alkenyl-functional silicone, a vinyl-functionalized silane, a vinyl-functionalized silicone, and combinations thereof.

14. The process of claim 1, wherein the compound containing an unsaturated group is a polyoxyalkylene having the generic formula:
R¹²(OCH₂CH₂)_{z}(OCH₂CHR¹⁴)_{w}-OR¹³ Formula (III),
R¹³O(CHR¹⁴CH₂O)_{w}(CH₂CH₂O)_{z}-CR¹⁵₂-C≡C-CR¹⁵₂-(OCH₂CH₂)_{z}(OCH₂CHR¹⁴)_{w}R¹⁶ Formula (IV),
or
H₂C=CR¹⁵CH₂O(CH₂CH₂O)_{z}(CH₂CHR¹⁴O)_{w}CH₂CR¹⁵=CH₂ (Formula V)
wherein each occurrence of R¹² is an unsaturated organic group containing from 2 to 10 carbon atoms, each occurrence of R¹³ is independently hydrogen, vinyl, or a polyether capping group of from 1 to 8 carbon atoms, each occurrence of R¹⁴ and R¹⁵ are independently monovalent hydrocarbon groups, except that R¹⁵ can also be chosen from hydrogen each occurrence of R¹⁶ is vinyl, or a polyether capping group of from 1 to 8 carbon atoms, each occurrence of z is 0 to 100 inclusive, and each occurrence of w is 0 to 100 inclusive.

15. The process of claim 1 wherein the reaction is carried out at a temperature of -40C to 200C.

16. The process of claim 1, wherein Formula (II) is iron stearate or an iron oxide.

17. The process of claim 1 further comprising removing the complex and or derivatives thereof from the hydrosilylated product.

18. The process of claim 1, wherein the silylhydride, unsaturated compound, promoter, and metal complex are provided in one solution; or wherein a solution comprising the silylhydride, the unsaturated compound, and the promoter is added to a solution comprising the metal complex; or wherein the process comprises (a) providing a solution comprising the metal complex and the promoter, and (b) adding a solution comprising the silylhydride and the unsaturated compound to the solution of (a).

19. The process of claim 1 having a molar ratio of the promoter to the metal complex of from 1000:1 to 1:1, preferably of from 10:1 to 1:1.

## Patentansprüche

1. Verfahren zur Hydrosilylierung einer ungesättigten Verbindung, umfassend mindestens eine Kohlenstoff-Kohlenstoff ungesättigte Gruppe, mit einem Silylhydrid in der Gegenwart eines Metallkomplexes der Formel (I), Formel (II) oder einer Kombination davon: 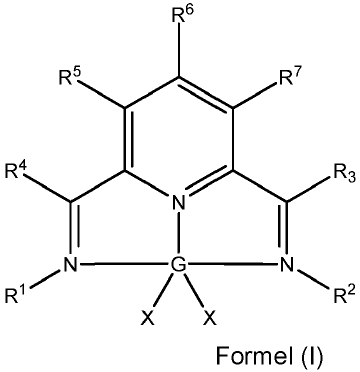 GXn Formel (II);
wobei das Verfahren das Aktivieren des Metallkomplexes mit einem Silylhydrid und einer Promotorverbindung umfasst, und G Mn, Fe, Ni, Ru oder Co ist, jedes Auftreten von R¹, R², R³, R⁴, R⁵, R⁶, R⁷ unabhängig voneinander H, C1-C18 Alkyl, Aryl oder eine inerte Gruppe ist, wobei jedwede zwei benachbarten R¹, R², R³, R⁴, R⁵, R⁶ und R⁷ Gruppen miteinander genommen einen Ring bilden können, der eine gesättigte oder ungesättigte cyclische Struktur ist, X in Formel (I) ein Anion ist, X in Formel (II) ein Anion oder ein Sauerstoffatom ist, und n = 1-3 einschließlich nicht ganze Zahlen, und wobei die Promotorverbindung eine Verbindung ist, die nicht die Disproportionierung von Alkoxysilanen katalysiert und aus Pyridin(di)imin-Verbindungen ausgewählt ist.

2. Verfahren gemäß Anspruch 1, wobei ein einzelnes Silylhydrid zur Aktivierung des Metallkomplexes und für die Hydrosilylierungsreaktion eingesetzt wird, wobei das Silylhydrid vorzugsweise aus Phenylsilan ausgewählt ist, und wobei das Silylhydrid am meisten bevorzugt Triethoxysilan ist.

3. Verfahren gemäß Anspruch 1, wobei das zur Aktivierung des Metallkomplexes eingesetzte Silylhydrid unterschiedlich von dem Silylhydrid, das Hydrosilylierung mit der ungesättigten Verbindung eingeht, ist, und wobei das zur Aktivierung des Metallkomplexes eingesetzte Silylhydrid vorzugsweise aus Phenylsilan und Triethoxysilan ausgewählt ist, und das Silylhydrid, welches Hydrosilylierung der ungesättigten Verbindung eingeht, ausgewählt ist aus R¹⁰ₐSiH₄₋ₐ, (RO)ₐSiH₄₋ₐ, QᵤTᵥTₚ^{H}D_{w}D^{H}ₓM^{H}_{y}M_{z} und Kombinationen davon, wobei Q SiO_{4/2} ist, T R⁴SiO_{3/2} ist, T^{H} HSiO_{3/2} ist, D R¹¹₂SiO_{2/2} ist, D^{H} R¹¹HSiO_{2/2} ist, M^{H} HR¹¹₂SiO_{1/3} ist, M R'₃SiO_{1/2} ist, jedes Auftreten von R und R' unabhängig voneinander C1-C18 Alkyl, C1-C18 substituiertes Alkyl ist, wobei R¹⁰ und R¹¹ gegebenenfalls mindestens ein Heteroatom enthalten, jedes Auftreten von a unabhängig einen Wert von 1 bis 3 aufweist, p von 0 bis 20 ist, u von 0 bis 20 ist, v von 0 bis 20 ist, w von 0 bis 1000 ist, x von 0 bis 1000 ist, y von 0 bis 20 ist, und z von 0 bis 20 ist, mit der Maßgabe, dass p + x + y gleich 1 bis 3000 ist, und die Valenzen von sämtlichen Elementen in dem Silylhydrid erfüllt sind.

4. Verfahren gemäß Anspruch 1, wobei der Promotor einen pKb von mehr als 9,7 aufweist.

5. Verfahren gemäß Anspruch 1, wobei der Promotor ausgewählt ist aus ^{Mes}PDI, ^{Ph}PDI, ^{Et2}PDI oder ^{iPr2}PDI.

6. Verfahren gemäß Anspruch 1, wobei Formel (I) ^{Mes}PDIFeCl₂ ist.

7. Verfahren gemäß Anspruch 1, wobei X in Formel (I) oder Formel (II) ausgewählt ist aus F⁻, Cl⁻, Br⁻, I⁻, einem Enolat, einem Acetylacetonat, CF₃R⁸SO₃- oder R⁹COO₋, wobei R⁸ eine kovalente Bindung oder eine C1-C6 Alkylengruppe ist, und R⁹ eine C1-C10 substituierte oder unsubstituierte Hydrocarbylgruppe, gegebenenfalls mindestens ein Heteroatom enthaltend, ist.

8. Verfahren gemäß Anspruch 1, wobei das ungesättigte organische Substrat ein inneres Olefin enthält.

9. Verfahren gemäß Anspruch 8, wobei das Verfahren ein inneres Additionsprodukt liefert.

10. Verfahren gemäß Anspruch 9, wobei das innere Additionsprodukt in einen inneren Alkohol umgewandelt wird.

11. Verfahren gemäß Anspruch 1, wobei der Komplex gemäß Formel (I) auf einem Träger immobilisiert ist, wobei der Träger vorzugsweise aus der Gruppe ausgewählt ist, bestehend aus Kohlenstoff, Silica, Aluminiumoxid, MgCl₂, Zirconiumoxid, Polyethylen, Polypropylen, Polystyrol, Poly(aminostyrol), Dendrimeren und Kombinationen davon, und wobei vorzugsweise mindestens eines von R¹-R⁷ eine funktionale Gruppe enthält, die kovalent mit dem Träger bindet.

12. Verfahren gemäß Anspruch 1, wobei das Silylhydrid zur Hydrosilylierung der ungesättigten Verbindung ausgewählt ist aus der Gruppe, bestehend aus R¹⁰ₐSiH₄₋ₐ, (RO)ₐSiH₄₋ₐ, QᵤTᵥTₚ^{H}D_{w}D^{H}ₓM^{H}_{y}M_{z} und Kombinationen davon, wobei Q SiO_{4/2} ist, T R⁴SiO_{3/2} ist, T^{H} HSiO_{3/2} ist, D R¹¹₂SiO_{2/2} ist, D^{H} R¹¹HSiO_{2/2} ist, M^{H} HR¹¹₂SiO_{1/3} ist, M R'₃SiO_{1/2} ist, jedes Auftreten von R und R' unabhängig voneinander C1-C18 Alkyl, C1-C18 substituiertes Alkyl ist, wobei R¹⁰ und R¹¹ gegebenenfalls mindestens ein Heteroatom enthalten, jedes Auftreten von a unabhängig einen Wert von 1 bis 3 aufweist, p von 0 bis 20 ist, u von 0 bis 20 ist, v von 0 bis 20 ist, w von 0 bis 1000 ist, x von 0 bis 1000 ist, y von 0 bis 20 ist, und z von 0 bis 20 ist, mit der Maßgabe, dass p + x + y gleich 1 bis 3000 ist, und die Valenzen von sämtlichen Elementen in dem Silylhydrid erfüllt sind, wobei vorzugsweise p, u, v, y und z von 0 bis 10 sind, w und x von 0 bis 100 sind, wobei p + x + y 1 bis 100 ist.

13. Verfahren gemäß Anspruch 1, wobei die Verbindung, enthaltend eine ungesättigte Gruppe, ausgewählt ist aus der Gruppe, bestehend aus einem Alkyl-verkappten Allylpolyether, einem Vinyl-funktionalisierten Alkyl-verkappten Allyl- oder Methallylpolyether, einem thermisch ungesättigten Amin, einem Alkin, einem C2-C40 Olefin, einem ungesättigten Alkyl- oder Cycloalkylepoxid, einem terminal ungesättigten Acrylat oder Methacrylat, einem ungesättigten Arylether, einem Aralken oder Aralkin, einem ungesättigten Cycloalkan, einem inneren Olefin, einer ungesättigten Säure oder Ester, einem Vinyl-funktionalisierten Polymer oder Oligomer, einem Alkenyl-funktionalen Silan, einem Alkenyl-funktionalen Silicon, einem Vinyl-funktionalisiertem Silan, einem Vinyl-funktionalisierten Silicon und Kombinationen davon.

14. Verfahren gemäß Anspruch 1, wobei die Verbindung, enthaltend eine ungesättigte Gruppe, ein Polyoxyalkylen mit der allgemeinen Formel ist:
R¹²(OCH₂CH₂)_{z}(OCH₂CHR¹⁴)_{w}-OR¹³ Formel (III),
R¹³O(CHR¹⁴CH₂O)_{w}(CH₂CH₂O)_{z}-CR¹⁵₂-C≡C-CR¹⁵₂-(OCH₂CH₂)_{z}(OCH₂CHR¹⁴)_{w}R¹⁶ Formel (IV),
oder
H₂C=CR¹⁵CH₂O(CH₂CH₂O)_{z}(CH₂CHR¹⁴O)_{w}CH₂CR¹⁵=CH₂ (Formel V),
wobei jedes Auftreten von R¹² eine ungesättigte organische Gruppe, enthaltend von 2 bis 10 Kohlenstoffatomen, ist, jedes Auftreten von R¹³ unabhängig Wasserstoff, Vinyl oder eine Polyether-verkappende Gruppe mit von 1 bis 8 Kohlenstoffatomen ist, jedes Auftreten von R¹⁴ und R¹⁵ unabhängig voneinander einwertige Kohlenwasserstoffgruppen sind, mit der Ausnahme, dass R¹⁵ auch aus Wasserstoff ausgewählt sein kann, jedes Auftreten von R¹⁶ Vinyl oder eine Polyether-verkappende Gruppe mit von 1 bis 8 Kohlenstoffatomen ist, jedes Auftreten von z 0 bis 100 einschließlich ist und jedes Auftreten von w 0 bis 100 einschließlich ist.

15. Verfahren gemäß Anspruch 1, wobei die Reaktion bei einer Temperatur von -40C bis 200C durchgeführt wird.

16. Verfahren gemäß Anspruch 1, wobei Formel (II) Eisenstearat oder ein Eisenoxid ist.

17. Verfahren gemäß Anspruch 1, weiter umfassend des Entfernen des Komplexes und/oder Derivaten davon von dem hydrosilylierten Produkt.

18. Verfahren gemäß Anspruch 1, wobei das Silylhydrid, die ungesättigte Verbindung, Promotor und Metallkomplex in einer Lösung bereitgestellt werden, oder wobei eine Lösung, umfassend das Silylhydrid, die ungesättigte Verbindung und der Promotor zu einer Lösung, umfassend den Metallkomplex, zugegeben wird, oder wobei das Verfahren (a) das Bereitstellen einer Lösung, umfassend den Metallkomplex und den Promotor, und (b) das Zugeben einer Lösung, umfassend das Silylhydrid und die ungesättigte Verbindung, zu der Lösung von (a) umfasst.

19. Verfahren gemäß Anspruch 1 mit einem Molverhältnis des Promotors zu dem Metallkomplex von 1000:1 bis 1:1, vorzugsweise von 10:1 bis 1:1.

## Revendications

1. Procédé d'hydrosilylation d'un composé insaturé comprenant au moins un groupe carbone-carbone insaturé avec un hydrure de silyle en présence d'un complexe métallique de formule (I), formule (II), ou une combinaison de ceux-ci : 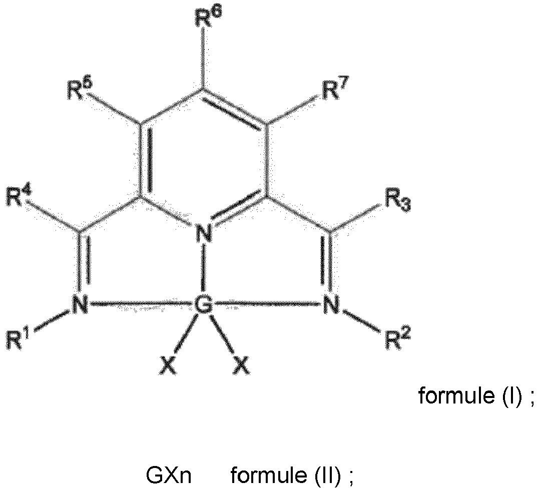 dans lequel le procédé comprend l'activation du complexe métallique avec un hydrure de silyle et un composé promoteur, et G est Mn, Fe, Ni, Ru ou Co ; chaque occurrence de R¹, R², R³, R⁴, R⁵, R⁶, R⁷ est indépendamment H, alkyle en C1-18, aryle ou un groupe inerte, dans lequel deux groupes voisins quelconques parmi R¹, R², R³, R⁴, R⁵, R⁶ et R⁷ pris ensemble peuvent former un cycle, qui est une structure cyclique saturée ou insaturée ; X dans la formule (I) est un anion ; X dans la formule (II) est un anion ou un atome d'oxygène, et n = 1 à 3 non-entiers y compris, et dans lequel le composé promoteur est un composé qui ne catalyse pas la dismutation des alcoxysilanes et est choisi parmi les composés pyridine(di)imine.

2. Procédé selon la revendication 1, dans lequel un unique hydrure de silyle est utilisé pour activer le complexe métallique et pour la réaction d'hydrosilylation, dans lequel l'hydrure de silyle est choisi de préférence parmi les phénylsilanes, et dans lequel l'hydrure de silyle est de manière la plus préférée, le triéthoxysilane.

3. Procédé selon la revendication 1, dans lequel l'hydrure de silyle utilisé pour activer le complexe métallique est différent de l'hydrure de silyle subissant l'hydrosilylation avec le composé insaturé, et dans lequel l'hydrure de silyle utilisé pour activer le complexe métallique est choisi de préférence parmi le phénylsilane et le triéthoxysilane, et l'hydrure de silyle effectuant l'hydrosilylation du composé insaturé est choisi parmi R¹⁰ₐSiH₄₋ₐ, (RO)ₐSiH₄₋ₐ, QᵤTᵥT^{H}ₚD_{w}D^{H}ₓM^{H}_{y}M_{Z}, et leurs combinaisons, dans lequel Q est SiO_{4/2}, T est R⁴SiO_{3/2}, T^{H} est HSiO_{3/2}, D est R¹¹₂SiO_{2/2}, D^{H} est R₁₁HSiO_{2/2}, M^{H} est HR¹¹₂SiO_{1/2}, M est R'₃SiO_{1/2}, chaque occurrence de R et de R' est indépendamment alkyle en C1-18, alkyle substitué en C1-8, dans lequel R¹⁰ et R¹¹ contiennent le cas échéant au moins un hétéroatome, chaque occurrence de a ayant indépendamment une valeur allant de 1 à 3, p va de 0 à 20, u va de 0 à 20, v va de 0 à 20, w va de 0 à 1000, x va de 0 à 1000, y va de 0 à 20, z va de 0 à 20, pourvu que p+x+y vaut 1 à 3000, et les valences de tous les éléments de l'hydrure de silyle sont satisfaites.

4. Procédé selon la revendication 1, dans lequel le promoteur a un pKb supérieur à 9,7.

5. Procédé selon la revendication 1, dans lequel le promoteur est choisi parmi ^{Mes}PDI, ^{Ph}PDI, ^{Et2}PDI ou ^{iPr2}PDI.

6. Procédé selon la revendication 1, dans lequel la formule (I) est ^{Mes}PDIFeCl₂.

7. Procédé selon la revendication 1, dans lequel X dans la formule (I) ou la formule (II) est choisi parmi F⁻, Cl⁻, Br⁻, I⁻, un énolate, un acétylacétonate, CF₃R⁸SO₃⁻ ou R⁹COO⁻, dans lequel R⁸ est une liaison covalente ou un groupe alkylène en C1-C6, et R⁹ est un groupe hydrocarbyle en C1-C10 substitué ou non substitué, contenant le cas échéant au moins un hétéroatome.

8. Procédé selon la revendication 1, dans lequel le substrat organique insaturé contient une oléfine interne.

9. Procédé selon la revendication 8, dans lequel ledit procédé produit un produit d'addition interne.

10. Procédé selon la revendication 9, dans lequel ledit produit d'addition interne est converti en un alcool interne.

11. Procédé selon la revendication 1, dans lequel le complexe selon la formule (I) est immobilisé sur un support, dans lequel le support est choisi de préférence parmi le groupe consistant en du carbone, de la silice, de l'alumine, MgCl₂, de la zircone, du polyéthylène, du polypropylène, du polystyrène, du poly(aminostyrène), des dendrimères et leurs combinaisons, et dans lequel de préférence au moins un des R¹ à R⁷ contient un groupe fonctionnel qui se lie de manière covalente au support.

12. Procédé selon la revendication 1, dans lequel l'hydrure de silyle pour l'hydrosilylation du composé insaturé est choisi parmi le groupe consistant en R¹⁰ₐSiH₄₋ₐ, (RO)ₐSiH₄₋ₐ, QᵤTᵥT^{H}ₚD_{w}D^{H}ₓM^{H}_{y}M_{Z} et leurs combinaisons de deux ou plusieurs de ceux-ci, dans lequel Q est SiO_{4/2}, T est R⁴SiO_{3/2}, T^{H} est HSiO_{3/2}, D est R¹¹₂SiO_{2/2}, D^{H} est R¹¹HSiO_{2/2}, M^{H} est HR¹¹₂SiO_{1/2}, M est R'₃SiO_{1/2}, chaque occurrence de R et de R' est indépendamment alkyle en C1-18, alkyle substitué en C1-18, dans lequel R¹⁰ et R¹¹ contiennent le cas échéant au moins un hétéroatome, chaque occurrence de a ayant indépendamment une valeur allant de 1 à 3, p va de 0 à 20, u va de 0 à 20, v va de 0 à 20, w va de 0 à 1000, x va de 0 à 1000, y va de 0 à 20, z va de 0 à 20, pourvu que p+x+y vaut 1 à 3000, et les valences de tous les éléments de l'hydrure de silyle sont satisfaites, où de préférence, p, u, v, y et z vont de 0 à 10, w et x vont de 0 à 100, où p+x+y vaut 1 à 100.

13. Procédé selon la revendication 1, dans lequel le composé contenant un groupe insaturé est choisi parmi le groupe consistant en un polyéther d'allyle à coiffe alkyle, un polyéther d'allyle ou de méthallyle à coiffe alkyle et à fonction vinyle, une amine à extrémité insaturée, un alcyne, une oléfine en C2-C40, un époxyde d'alkyle ou de cycloalkyle insaturé, un acrylate ou l'acrylate de méthyle à extrémité insaturée, un aryléther insaturé, un aralcène ou un aralcyne, un cycloalcane insaturé, une oléfine interne, un acide ou ester insaturé, un polymère ou oligomère à fonction vinyle, un silane à fonction alcényle, une silicone à fonction alcényle, un silane à fonction vinyle, une silicone à fonction vinyle, et leurs combinaisons.

14. Procédé selon la revendication 1, dans lequel le composé contenant un groupe insaturé est un polyoxyalkylène ayant la formule générique :
R¹²(OCH₂CH₂)_{z}(OCH₂CHR¹⁴)_{w}-OR¹³ formule (III),
R¹³O(OCHR¹⁴CH₂O)_{w}(CH₂CH₂O)_{z}-CR¹⁵₂-C≡C-CR¹⁵₂-(OCH₂CH₂)_{z}(OCH₂CHR¹⁴)_{w}R¹⁶ formule (IV),
ou
H₂C=CR¹⁵CH₂O(CH₂CH₂O)_{z}(CH₂CHR¹⁴O)_{w}CH₂CR¹⁵=CH₂ formule (V)
dans lequel chaque occurrence de R¹² est un groupe organique insaturé contenant 2 à 10 atomes de carbones, chaque occurrence de R¹³ est indépendamment, hydrogène, vinyle ou un groupe de coiffage polyether ayant 1 à 8 atomes de carbone, chaque occurrence de R¹⁴ et de R¹⁵ est indépendamment des groupes hydrocarbonés monovalents, excepté que R¹⁵ peut également être hydrogène, chaque occurrence de R¹⁶ est vinyle, ou un groupe de coiffage polyéther ayant 1 à 8 atomes de carbone, chaque occurrence de z est 0 à 100 y compris, et chaque occurrence de w est 0 à 100 y compris.

15. Procédé selon la revendication 1, dans lequel la réaction est réalisée à une température allant de -40°C à 200°C.

16. Procédé selon la revendication 1, dans lequel la formule (II) est le stéarate de fer ou un oxyde de fer.

17. Procédé selon la revendication 1, comprenant en outre, l'élimination du complexe et/ou de ses dérivés du produit hydrosilylé.

18. Procédé selon la revendication 1, dans lequel l'hydrure de silyle, le composé insaturé, le promoteur et le complexe métallique sont fournis dans une seule solution ; ou dans lequel une solution comprenant l'hydrure de silyle, le composé insaturé et le promoteur est ajoutée à une solution comprenant le complexe métallique ; ou dans lequel le procédé comprend (a) la fourniture d'une solution comprenant le complexe métallique et le promoteur, et (b) l'addition d'une solution comprenant l'hydrure de silyle et le composé insaturé à la solution de (a).

19. Procédé selon la revendication 1, présentant un rapport molaire du promoteur au complexe métallique allant de 1000:1 à 1:1, de préférence de 10:1 à 1:1.
